**Europäisches Patentamt**

**European Patent Office**

**Office européen des brevets**

(11) Numéro de publication : **0 457 661 B1**

# (12) FASCICULE DE BREVET EUROPEEN

(45) Date de publication du fascicule du brevet :
**06.07.94 Bulletin 94/27**

(51) Int. Cl.$^5$ : **B60R 25/10**

(21) Numéro de dépôt : **91401229.9**

(22) Date de dépôt : **13.05.91**

(54) **Détecteur à ultrasons volumétrique.**

(30) Priorité : **18.05.90 FR 9006223**

(43) Date de publication de la demande :
**21.11.91 Bulletin 91/47**

(45) Mention de la délivrance du brevet :
**06.07.94 Bulletin 94/27**

(84) Etats contractants désignés :
**DE GB IT NL**

(56) Documents cités :
**GB-A- 2 050 022**
**GB-A- 2 137 749**
**GB-A- 2 217 013**
**US-A- 4 729 661**

(73) Titulaire : **VALEO SECURITE HABITACLE**
**12bis, rue Maurice Berteaux**
**F-78290 Croissy-Sur-Seine (FR)**

(72) Inventeur : **Iacovella, Rocco**
**7, rue du Château**
**F-94400 Vitry-sur-Seine (FR)**

(74) Mandataire : **Gamonal, Didier**
**Valeo Management Services**
**Sce Propriété Industrielle**
**2, rue André Boulle**
**B.P. 150**
**F-94004 Créteil (FR)**

EP 0 457 661 B1

## Description

La présente invention concerne un détecteur à ultrasons volumétrique. Elle est particulièrement adaptée à l'équipement des alarmes pour véhicules automobiles.

Dans l'art antérieur, on sait déjà réaliser des alarmes volumétriques comprenant des transducteurs capables d'émettre et/ou de recevoir des ondes ultrasonores qui, installés dans le véhicule dans un état de veille, permettent de détecter un certain nombre d'événements accidentels survenant au véhicule surveillé. En particulier, l'ouverture d'une porte, le bris d'une vitre, un choc violent sur une partie de la voiture, la présence d'un nouvel objet ou d'un individu dans l'habitacle peuvent déclencher une action d'alarme quand le détecteur a mesuré un changement de la répartition d'énergie sonore dans l'habitacle.

Dans l'art antérieur, un problème particulier se pose pour les alarmes notamment du domaine automobile : celui de la consommation électrique. En effet, les véhicules sous alarme consomment en permanence une certaine quantité de courant qui est prélevée sur la batterie.

Or, les batteries de véhicules peuvent, quand le véhicule stationne pendant une longue période, se décharger si rapidement que l'alarme devient inopérante au bout d'un certain temps et que le véhicule ne peut plus démarrer. Dans ces conditions, toute modification des systèmes d'alarme entraînant une diminution de la consommation est un progrès appréciable dans la technique des détecteurs volumétriques.

La GB-A-2 137 749 montre un détecteur à ultrasons volumétrique du type comportant au moins un mode de fonctionnement en émission et au moins un mode de fonctionnement en réception d'une onde ultrasonore progressant dans un volume dans des fenêtres temporelles d'activation, ces fenêtres étant dans une période prédéterminée. Le cycle entre transmission et émission dépend de la programmation du microcalculateur.

La solution du problème de l'invention se retrouve dans les caractéristiques de la revendication 1.

L'invention se caractérise notamment en ce que le détecteur comporte des moyens pour régler la forme d'une fenêtre temporelle d'activation d'un circuit électronique d'émission et d'une fenêtre temporelle d'activation d'un circuit électronique de réception de façon à réduire la consommation électrique du détecteur en optimisant sa sensibilité.

Dans la suite de la description, la présente invention est décrite dans un mode de réalisation dans lequel le détecteur comporte au moins une paire de transducteurs ultrasonores, le premier travaillant en mode "émission" le second travaillant en mode "réception".

Dans d'autres modes de réalisation, le détecteur comporte au moins un transducteur ultrasonore fonctionnant alternativement en "émission" puis en "réception".

De même, ainsi qu'il est connu de l'art antérieur l'énergie ultrasonore émise par le détecteur peut être ajustée aussi bien par son amplitude que par la durée d'une salve d'émission. Il est aussi prévu dans certains modes de réalisation, non spécialement décrits, de mélanger ces deux modes de réglage de l'énergie ou bien simultanément au cours d'une même phase de réglage ou bien dans deux phases de réglage successives.

D'autres caractéristiques et avantages seront mieux compris à l'aide de la description et des dessins annexés :
- la figure 1 : un dessin représentant une automobile équipée d'un détecteur selon l'invention ;
- la figure 2 : des diagrammes temporels E, R, R1 et US du fonctionnement du système d'alarme de la figure 1 ;
- la figure 3 : un schéma de détecteur selon l'invention à deux paires de transducteurs ;
- la figure 4 : un diagramme décrivant la variation temporelle de l'énergie acoustique dans l'habitacle après l'émission d'une impulsion ultrasonore ;
- la figure 5 : différents cas d'apparition de conditions d'alarme ;
- la figure 6 : un exemple d'application d'une stratégie permettant de régler le circuit d'émission selon l'invention ;
- la figure 7 : un schéma décrivant un fonctionnement du détecteur à ultrasons volumétrique de la présente invention dans des conditions réelles ;
- la figure 8 : un schéma bloc du détecteur selon l'invention.

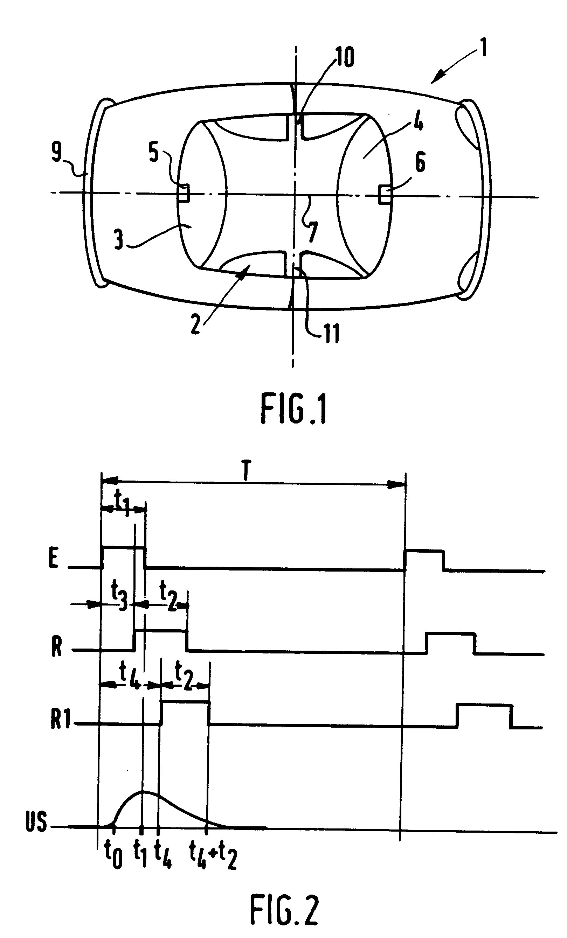

A la figure 1, on a représenté un véhicule 1 comportant un avant 8 et un arrière 9 et dans lequel se trouve un habitacle 2.

Cette répartition en trois volumes n'est pas nécessaire à l'invention, mais permet simplement de situer les problèmes techniques.

L'habitacle comporte en particulier des vitres ou pare-brise comme le pare-brise 4 et à l'arrière une plage arrière 3. A l'intérieur de l'habitacle, on trouve des sièges avec des dossiers et des appuis-tête ainsi que des équipements qui peuvent varier selon les modèles de véhicules. Leur disposition affecte profondément la répartition volumique de l'énergie acoustique.

Un détecteur à ultrasons volumétrique est installé à l'intérieur de l'habitacle et comporte un transducteur d'émission 5 et un transducteur de réception 6. Le transducteur d'émission émet une onde ultrasonore qui s'établit dans le volume du véhicule. Le véhicule interagit avec cette onde ultrasonore et il s'établit au bout d'un certain temps un régime stationnaire qui est détecté par le transducteur de détection 6.

Toute modification de la répartition de l'énergie acoustique par rapport à des conditions de réception prédéterminées peut entraîner le déclenchement d'une action d'alarme.

Dans le cas où les transducteurs émetteurs et/ou récepteurs émettent et reçoivent en permanence, le niveau de la consommation électrique du système d'alarme est très élevé.

Il a déjà été proposé des fonctionnements impulsionnels qui permettent de réduire notablement la consommation électrique à l'émission ultrasonore.

Dans un tel fonctionnement, l'émetteur d'ultrasons émet une récurrence de vibrations ultrasonores répétées périodiquement par exemple toutes les 200 (deux cents) millisecondes, ces vibrations durant par exemple 50 (cinquante) millisecondes. L'émetteur est donc actif pendant le quart du temps. Puis on passe en mode détection pendant le reste du temps restant avant l'apparition d'une nouvelle émission d'ondes ultrasonores.

Selon la présente invention, les circuits électroniques qui servent les transducteurs 5 et 6 d'émission et de réception ne sont activés que pendant des créneaux de temps ou fenêtres temporelles prédéterminés, en distinguant l'émetteur du récepteur et en liant la durée des fenêtres d'émission à celle des fenêtres de réception.

De cette façon, on est capable de réduire au strict minimum la quantité de courant consommée sur la batterie en fonction des conditions d'alarme prédéterminées.

A la figure 2, on a représenté quatre diagrammes E, R, R1, US décrivant le fonctionnement d'un système d'alarme selon l'invention.

Le premier chronogramme E est constitué par une série de créneaux séparés par une période T et de durée t1. La durée t1 de chaque créneau correspond à la quantité d'énergie produite par le transducteur d'émission 5 et est suffisante pour obtenir une bonne sensibilité du détecteur.

On a constaté qu'en suivant le chronogramme établi selon l'invention, on pouvait réduire la quantité d'énergie émise sans dégrader la sensibilité. Il en résulte qu'on sait réduire la consommation électrique du détecteur par rapport aux solutions de l'art antérieur.

A la figure 2, le second chronogramme R est une suite de créneaux de période T, par exemple fixée à 200 ms, identique à celle du chronogramme d'émission E, et de durée t2. Le créneau du chronogramme R représente la fenêtre temporelle d'activation du circuit électronique d'analyse du signal élaboré par le transducteur de réception 6. Le transducteur 6 est mis en analyse au bout d'un temps t3 après l'apparition de l'onde ultrasonore dans l'habitacle. La fenêtre dure un temps t2, par exemple fixée à 20 ms, suffisant pour capter l'environnement sonore.

Dans un mode de réalisation préféré, représenté au chronogramme R1, le retard t4 du front montant de la fenêtre d'activation du circuit de réception sur le front montant de la fenêtre d'activation du circuit d'émission est au moins égal à la durée de parcours d de l'onde directe v du transducteur d'émission au transducteur de réception t4 est donc au moins égal à d/v.

Dans un exemple typique de réalisation, la période T est de 200 millisecondes ($10^{-3}$ seconde), et le temps t1 peut être ajusté dans une plage de valeurs allant de 2 à 20 millisecondes (ms).

Le quatrième chronogramme US est une courbe représentative de l'énergie ultrasonore qui peut être reçue sur le transducteur 6. Cette énergie est nulle à l'instant initial et commence à croître au bout d'un temps t0 après le début de l'activation E du transducteur d'émission 5.

On définit d'autre part la saturation acoustique du système constitué par le volume de l'habitacle surveillé et le système d'alarme qui exerce cette surveillance comme étant le niveau de l'énergie ultrasonore émise à partir de laquelle le signal de réception ne varie plus.

Si l'on travaille sous la saturation du volume de l'habitacle 2, l'énergie ER est croissante jusqu'à l'instant t1, instant de fin d'activation du circuit d'émission.

Entre le début de la fenêtre temporelle d'émission E et un instant t4 sur le chronogramme R1, un régime stationnaire s'établit dans le véhicule. Pendant cette période, un certain nombre de phénomènes transitoires peut apparaitre et qui ne correspond pas à des conditions d'alarme. Puis l'onde ultrasonore d'énergie ER s'évanouit graduellement entre les instants t4 et t4 plus t2.

Dans un exemple préféré de réalisation de l'invention représenté sur le troisième chronogramme R1, le circuit électronique de réception associé au transducteur de réception 6 n'est activé qu'à partir de l'instant t4 qui vient d'être décrit.

De cette façon, on est certain de ne faire travailler le détecteur à ultrasons volumétrique que pendant une période d'analyse utile. La récurrence de ces deux fenêtres temporelles à la période T permet, à l'échelle du temps des événements que l'on cherche à détecter (intrusion et bris de glace) de détecter la majorité des situations de déclenchement d'une alarme de voiture.

D'autre part, en réduisant les temps de fonctionnement de tout le détecteur à ultrasons volumétrique, on a réduit la consommation électrique au strict minimum.

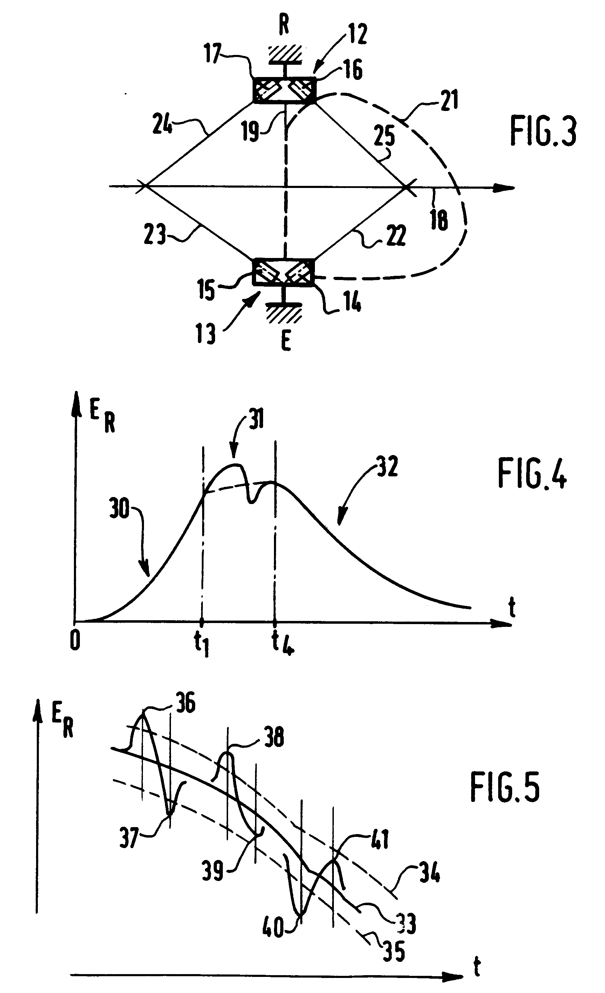

Selon la présente invention, les transducteurs d'émission et de réception installés dans le volume de l'habitacle du véhicule sous contrôle fonctionnent de manière alternée pendant des instants réduits. Jusqu'à présent, on a décrit un mode de réalisation ne comportant qu'un seul transducteur d'émission et un seul transducteur de réception. L'invention s'applique également à d'autres répartitions. En particulier, à la figure 3, on a représenté un mode de réalisation de la présente invention selon lequel deux paires de transducteurs acoustiques sont prévues.

A la figure 3, de part et d'autre de l'axe central 18 de l'habitacle, on a disposé un premier boîtier 12 de réception et un second boîtier 13 d'émission.

Ces deux boîtiers contiennent chacun deux transducteurs pointés de part et d'autre de l'axe 19 qui relie les deux boîtiers. Les deux axes 18 et 19 sont perpendiculaires et les fixations des boitiers sont constituées par les montants latéraux de l'habitacle du véhicule sous surveillance.

Le boîtier d'émission 13 comporte un transducteur d'émission 14 vers l'avant du véhicule selon une direction principale 22, et un transducteur d'émission 15 dirigé selon une direction principale 23 vers l'arrière du véhicule.

De même et symétriquement, le boîtier de réception 12 comporte un premier transducteur de réception dirigé selon une direction principale 25 vers l'avant 16 du véhicule et un second transducteur de réception 17 dirigé selon une direction principale 24 vers l'arrière du véhicule.

Les transducteurs d'émission et de réception utilisés sont relativement peu directifs. En particulier, le diagramme de rayonnement 21 du transducteur d'émission avant 14 peut être à peu près ouvert sur 90° d'espace. D'autre part, la disposition en deux demi-volumes est avantageuse, car on s'est aperçu que la sensibilité du système d'alarme devrait être adaptée selon que les événements acoustiques détectés provenaient de l'arrière ou de l'avant du véhicule.

En effet, la partie avant du véhicule est en général plus réfléchissante des ondes ultrasonores que la partie arrière. Ceci provient de la présence de la plage arrière et des dossiers des sièges qui ont un effet amortisseur tandis que le pare-brise avant du véhicule a un effet renforçateur des réflexions. De ce fait, on peut régler différemment les sensibilités en séparant le demi volume avant du demi volume arrière dans le volume de l'habitacle.

Selon l'invention, on tient compte de cette caractéristique quel que soit le nombre de transducteurs réservés à l'émission ou à la réception. Ainsi, dans un mode de réalisation où un seul transducteur est réservé à l'émission et où deux transducteurs de réception se partagent le volume de l'habitacle en deux demi-espaces, leurs sensibilités sont choisies de façon à tenir compte des différences entre ces deux demi-espaces.

A cet effet, chaque transducteur de réception est connecté à son propre amplificateur d'adaptation et répond à une caractéristique acoustique prédéterminée du demi-volume avant ou arrière.

Les transducteurs contenus dans chacun des boîtiers 12 et 13 sont connectés par des câbles convenables à des circuits de traitement électronique ainsi qu'il sera vu plus loin.

A la figure 4, on a représenté un diagramme représentant l'énergie ultrasonore établie dans le volume de l'habitacle après l'apparition d'un créneau d'énergie ultrasonore rayonnée par les transducteurs 14 ou 15.

Pendant une durée allant jusqu'à l'instant t1, l'énergie ultrasonore augmente, puis pendant une période d'établissement du régime stationnaire, une oscillation 31 apparaît autour d'une valeur moyenne.

A l'extinction de la durée t2, l'énergie sonore n'étant pas entretenue, décroît jusqu'à s'évanouir complètement.

C'est pendant cette période de décroissance qu'on obtient la meilleure sensibilité pour une énergie ultrasonore déterminée puisque à cet instant l'énergie acoustique est plus faible tandis que les variations éventuelles détectées sont d'une valeur que l'on ne peut ajuster puisqu'elles sont accidentelles.

Pour obtenir le meilleur rendement de l'installation, le circuit d'émission est réglé de façon à ce que le niveau maximum 31 de l'énergie ultrasonore atteigne à peu près la saturation du système d'alarme.

Pendant la phase de décroissance de l'énergie ultrasonore, on peut disposer une fenêtre 32 d'analyse des phénomènes acoustiques se produisant dans le volume contrôlé, qui correspond à la fenêtre R1 déjà décrite à la figure 2.

Selon l'invention, l'énergie ultrasonore reçue pendant une fenêtre d'activation du circuit de réception est détectée et sa valeur moyenne pendant cette fenêtre temporelle est mémorisée temporairement.

La valeur de l'énergie moyenne détectée pendant une fenêtre est ajoutée à une variable dont le mode de calcul est tel qu'il permet d'obtenir une valeur moyenne de l'énergie ultrasonore détectée pendant un nombre N prédéterminé de fenêtres de réception successives, précédentes à la fenêtre dont l'énergie moyenne détectée vient d'être mémorisée.

On obtient ainsi une valeur dite de "moyenne glissante" mémorisée à chaque période T et remise à jour.

Dans un mode de réalisation préféré, le nombre N de périodes de calcul de la moyenne glissante est de 8. D'une manière générale, on pose pour simplifier les calculs en codage binaire $N = 2^k$ où k est un entier arbitraire, la division par N+1 équivalent alors à un simple décalage de la donnée.

La moyenne glissante à calculer est M(i), définie par :

$$M(i) = [M(i - 1) \times (N - 1) + Erm]/N$$

où N est le nombre de périodes de calcul de M(i), soit 7 ;

Erm est l'énergie reçue lors de la fenêtre i

M(i-1) est la valeur précédente de la moyenne glissante.

On peut remplacer N dans la formule de M(i) par un paramètre Poids lié directement au nombre de périodes.

Cette "moyenne glissante" est en permanence comparée à une valeur de consigne enregistrée dans une troisième variable mémoire.

Or, on a constaté qu'une telle comparaison devait tenir compte de situations différentes.

A la figure 5, on a représenté trois cas possibles de variation accidentelle de l'énergie ultrasonore provoquée par une intrusion ou toute condition physique pouvant déclencher l'alarme.

Dans le premier cas, l'énergie ultrasonore $E_R$ qui, dans des conditions normales devrait décroître selon la courbe 33 subit une variation 36, 37 dépassant des valeurs de seuil 34 et 35 de part et d'autre d'une courbe moyenne 33, dite normale.

Dans le second cas, la perturbation comporte un pic 38 dépassant seulement le seuil 34 supérieur tandis que la perturbation comporte un pic négatif 39 insuffisant pour atteindre le seuil 35.

Le troisième cas de perturbation est représenté par la perturbation 40, 41 dont le pic négatif 40 dépasse le seuil 35 tandis que son pic 41 n'atteint pas la valeur du seuil 34. De ce fait, le traitement de la détection selon l'invention comporte une détection de deux seuils de part et d'autre d'une courbe moyenne correspondant à une énergie rayonnée par les transducteurs d'émission.

Dans un mode de réalisation préféré, ces deux seuils sont égaux et de signes contraires de part et d'autre de la valeur de consigne de détection de l'énergie moyenne reçue.

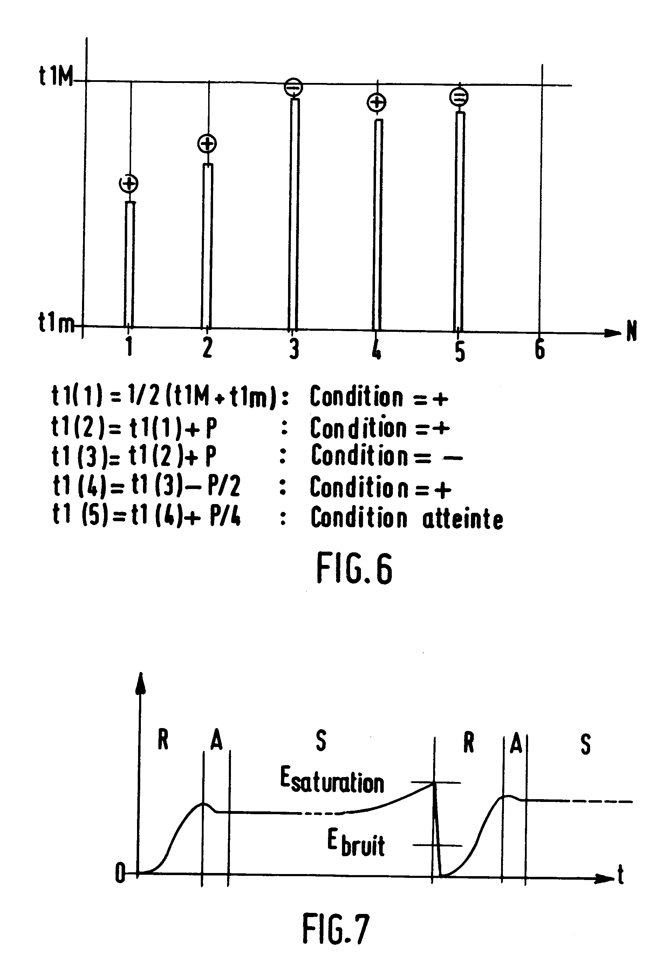

A la figure 6, on a représenté un schéma exposant une stratégie de réglage du système d'alarme selon l'invention.

Quand le propriétaire du véhicule quitte son véhicule et le place sous alarme, le système d'alarme selon l'invention entre dans une première phase de réglage qui permet d'adapter le système d'alarme aux conditions régnant dans l'habitacle.

En effet, on s'est aperçu que la majorité des alarmes de l'art antérieur exigeait un réglage particulier non seulement selon le type du véhicule mais aussi selon le contenu de l'habitacle du véhicule dans lequel se trouvait l'alarme.

Ce réglage est laissé à l'appréciation du monteur de l'alarme ou de l'utilisateur ce qui est un inconvénient notable de l'art antérieur. Ainsi, la présence d'un nouvel objet comme une valise laissée sur la plage arrière dans l'habitacle pouvait modifier une répartition de l'énergie ultrasonore dans l'habitacle entraînant l'apparition d'un dépassement de seuil peu après l'établissement d'un régime permanent. Dans ce cas, le propriétaire a déjà quitté son véhicule et l'alarme se déclenche sans qu'une situation d'alarme réelle ne soit intervenue.

Pour porter remède à cet inconvénient de l'art antérieur, l'invention propose un moyen simple pour éviter de recourir à un réglage par l'opérateur ou par l'utilisateur du système d'alarme à chaque installation ou mise sous alarme.

A cet effet, les transducteurs d'émission émettent une première quantité d'énergie ultrasonore dans le volume de l'habitacle. On considère que pendant cette période de réglage aucune condition d'alarme ne peut apparaître. Elle dure typiquement une durée de 1 à 2 secondes.

Pendant une première période, l'énergie d'émission est réglée d'abord à un niveau arbitraire puis ajustée de façon à ce que la limite de saturation de la chaîne de réception soit atteinte.

A cet effet, le circuit de commande contient une stratégie pré-enregistrée.

A la figure 6, on a représenté un exemple de réalisation d'une telle stratégie dont le choix est à la portée de l'homme de métier.

Dans ce mode de réalisation préféré, la valeur de l'énergie ultrasonore rayonnée est réglée par la largeur de chaque fenêtre temporelle d'activation du circuit d'émission.

Dans un autre mode de réalisation, l'énergie ultrasonore rayonnée (ou émise) est ajustée par l'amplitude de l'onde ultrasonore émise pendant une durée t1 du créneau d'activation d'émission prédéterminée.

A la figure 6, l'opération de réglage est effectuée par itération de plusieurs analyses. Au cours de la première analyse, la durée du créneau d'activation d'émission est fixée à la demi somme des durées maximale et minimale pré-enregistrées de la fenêtre temporelle d'activation du circuit d'émission.

Dans un mode préféré de réalisation, la durée minimale $t_1m$ est de 2ms et la durée $t_1M$ maximale est de 20ms.

Dans l'exemple de réalisation, le circuit électronique de réception comporte un moyen pour indiquer au circuit d'émission que la condition de saturation du système d'alarme n'est pas encore atteinte. Le circuit d'émission émet donc une seconde salve d'ultrasons pendant une fenêtre correspondante à une augmentation d'une durée arbitraire P de la durée précédente.

Le circuit de réception indique au circuit d'émission que la condition de limite de saturation n'est pas encore atteinte. Un calcul de la durée du troisième créneau à émettre est exécuté. Dans cette stratégie, on ajoute la même quantité P à la durée du créneau précédent.

Dans l'exemple de la figure 6, le circuit de réception indique au circuit d'émission que la condition de limite de saturation était dépassée. L'étape suivante de calcul consiste alors à retirer la moitié de la durée P arbitraire à la durée du créneau émis à l'étape précédente.

Enfin, le circuit d'émission ayant indiqué que la condition n'était pas encore atteinte, on exécute une nouvelle étape de calcul dans laquelle, on augmente d'une quantité moitié de la quantité précédente (soit P/4) la durée précédente d'activation du circuit d'émission.

Le circuit de réception ayant indiqué au circuit d'émission que la condition de limite de saturation était atteinte, le détecteur sort de la phase de réglage. Ici, on a réalisé cinq analyses successives, de réglage du détecteur.

Le mécanisme de réglage de l'énergie de l'onde ultrasonore émise peut aussi se faire, non plus en réglant la durée t1 du créneau d'activation du circuit d'émission mais en réglant l'amplitude des ondes ultrasonores émises, par exemple en agissant sur la tension d'excitation du transducteur.

A la figure 7, on a représenté un diagramme de temps-énergie d'un détecteur selon l'invention à l'aide duquel on va décrire maintenant le fonctionnement général du détecteur.

Le diagramme représente la moyenne $M(i)$ de l'énergie reçue par le circuit de réception à chaque période T de fonctionnement du détecteur. Pendant une première phase notée R, le détecteur à ultrasons volumétrique selon l'invention est dans une phase de réglage en appliquant une stratégie de réglage comme celle décrite à l'aide de la figure 6.

Pendant cette phase, l'énergie $M(i)$ passe par une valeur supérieure pour atteindre ensuite à la fin de la période de réglage une valeur correspondant à la limite de saturation du système.

On rentre ensuite dans une phase d'apprentissage notée A.

Quand un véhicule est en stationnement sans protection du détecteur, il est soumis à un certain nombre d'intempéries : pluie, chutes de neige, passages nuageux masquant le soleil, rayons du soleil, etc. Tous ces événements ont une action sur le comportement acoustique du volume de l'habitacle sous surveillance.

Selon l'invention, la phase d'apprentissage qui suit la phase de réglage permet d'adapter périodiquement le système d'alarme et la condition d'alarme de façon à s'adapter aux conditions environnantes.

A cet effet, pendant la période d'apprentissage automatique A, le détecteur nécessite un nombre prédéterminé d'acquisitions.

Quand le circuit de réception est activé, l'énergie reçue pendant la durée d'activation est calculée et mémorisée dans une première zone ou adresse d'une mémoire du détecteur. Cette valeur contribue au calcul d'une moyenne glissante de l'énergie reçue.

La moyenne glissante est donc calculée à chaque période T après que l'énergie reçue Erm pendant un créneau de réception ait été mesurée et enregistrée.

Cette moyenne glissante est donc une valeur qui n'est pas utilisable avant que les premiers créneaux d'émission aient été envoyés.

A la fin de cette étape d'apprentissage, la moyenne glissante $M(N)$ calculée est exploitable et le mécanisme d'alarme peut être activé. On sort alors de la seconde étape A d'apprentissage. On entre alors dans la troisième étape S de surveillance. Pendant cette étape, à chaque créneau de réception, le détecteur calcule l'énergie reçue et met à jour la valeur actuelle de la moyenne glissante. Cette valeur actuelle est comparée aux conditions de déclenchement de l'alarme à laquelle le détecteur peut être relié.

En fait, pendant cette étape de surveillance S, le détecteur comporte aussi un moyen pour détecter si l'énergie moyenne reçue, c'est-à-dire, à la ième période T, la valeur actuelle $M(i)$ de la moyenne glissante, satisfait à la double condition :

$$M(i) > E_{bruit}$$
$$M(i) < E_{saturation}$$

où $E_{bruit}$ correspond au niveau du signal qui ne peut plus être distingué facilement du niveau de bruit du détecteur et $E_{saturation}$ correspond à l'énergie au-dessus de laquelle le détecteur ne peut plus distinguer d'augmentation de l'énergie reçue.

Si la valeur $M(i)$ en cours ne satisfait pas à cette double condition, l'étape de surveillance S est terminée et le détecteur retourne aux étapes de réglage R et d'apprentissage précitées. De ce fait la valeur $M(i)$ rentre alors automatiquement, quelles que soient les conditions qui ont conduit à cette situation, dans la gamme $[E_{bruit}, E_{saturation}]$.

On remarque aussi que les paramètres de forme t1, (durée du créneau) ou E1 (amplitude de l'onde ultrasonore émise) de la fenêtre d'activation du circuit d'émission sont fixes pendant la troisième étape S de surveillance.

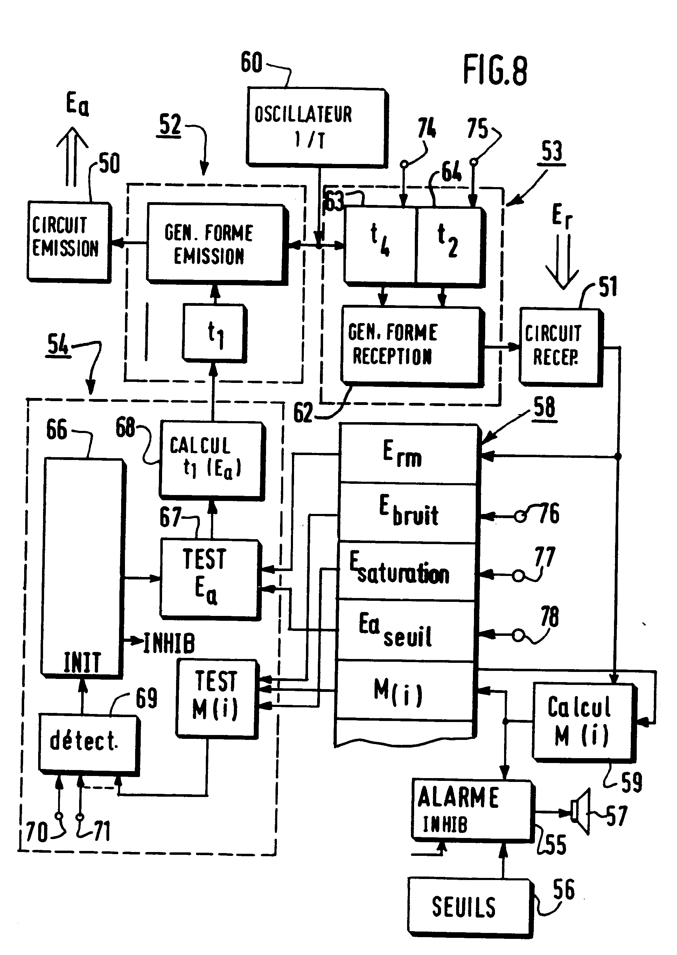

A la figure 8, on a représenté un mode de réalisation d'un détecteur selon l'invention dans un mode préféré de réalisation.

Dans un détecteur du genre représenté à la figure 8, un circuit d'émission 50 et un circuit de réception 51 sont activés par des formes d'ondes, comme représentées à la figure 2. Ces circuits d'émission et de réception 50 et 51 activent au moins un transducteur ultrasonore ou encore deux transducteurs distincts le premier attribué à la fonction d'émission et le second à la fonction de réception.

Le circuit électronique d'émission 50 comporte un oscillateur haute fréquence par exemple à 40 kilohertz pour exciter le transducteur ultrasonore émettant une énergie Ea d'ondes ultrasonores dans le volume surveillé. Le circuit d'émission 50 est, ainsi qu'on l'a déjà décrit, activé par un signal composé par une récurrence de fenêtres d'activation comme la fenêtre temporelle en forme de créneau du chronogramme E de la figure 2. Les paramètres T et $t_1$ de forme sont déterminés par un moyen pour régler la forme de la fenêtre temporelle d'activation du circuit d'émission.

Ce moyen 52 comporte principalement un oscillateur 60 destiné à engendrer une récurrence de fenêtres successives d'émission, comme représentées à la figure 2E.

La fréquence de cet oscillateur est de 1/T.

La sortie de cet oscillateur 60 est transmise à un circuit 61 générateur de la forme de la fenêtre temporelle d'émission. Cette forme est un créneau rectangulaire comportant un front montant et une durée t1. Le front montant est activé par l'oscillateur 60 et la durée t1 correspond à une valeur mémorisée dans une mémoire non représentée à la figure 8. La valeur mémorisée est la valeur qui est calculée lors des étapes de réglage et d'apprentissage qui ont été détaillées à la figure 7.

D'autre part, la sortie de l'oscillateur 60 est transmise à un autre moyen pour régler la forme de la fenêtre temporelle d'activation du circuit de réception. Ce moyen 53 comporte principalement un circuit 63 de réglage du retard t4 de la fenêtre temporelle d'activation du circuit de réception. Cette fenêtre est créée par un générateur 62 de forme de fenêtre temporelle d'activation du circuit de réception sous la forme d'une suite de créneaux carrés comme représentés à la figure 2R1.

Le circuit 63 de réglage du retard t4 est ajusté à une valeur prédéterminée en fonction d'un réglage du détecteur selon l'invention lors de son installation dans le véhicule.

A cet effet, on dispose d'un moyen de réglage 74 qui peut être, dans un mode préféré de réalisation, une valeur enregistrée dans une mémoire lors d'une phase d'initialisation avec un outil informatique.

Un tel outil informatique peut être constitué par un appareil pour mesurer le temps mis par l'onde directe pour passer du transducteur d'émission au transducteur de réception.

D'autre part, le moyen 53 comporte aussi un circuit 64 de réglage de la durée t2 du créneau carré constituant la forme de la fenêtre temporelle d'activation du circuit de réception.

La valeur de cette durée t2 peut être prédéterminée à l'avance et correspond à peu près à l'évanouissement de l'énergie ultrasonore parvenant au transducteur de réception.

Le circuit 64 comporte une entrée 75 permettant de fixer d'avance la durée t2.

Cette durée t2 d'autre part dans un mode de réalisation particulier, peut être asservie à la valeur de l'énergie ultrasonore EA émise par le détecteur.

Les sorties des deux circuits 63 et 64 fixant d'une part le front montant par la sortie du circuit 63 et la durée du créneau par la sortie du circuit 64 sont fournies à un générateur de la forme de la fenêtre temporelle d'activation du circuit de réception.

Ce générateur produit une succession de créneaux carrés selon le modèle de la figure 2R1.

D'autre part le détecteur selon l'invention comporte aussi un moyen 54 pour ajuster la valeur de l'énergie émise par le détecteur dans l'habitacle. Ce moyen 54 permet d'adapter la sensibilité du détecteur aux conditions ambiantes.

Le détecteur selon l'invention comporte aussi une mémoire 58 constituée par exemple par une mémoire RAM à alimentation permanente comportant plusieurs adresses dans lesquelles sont inscrites des valeurs des paramètres utilisés lors du fonctionnement du détecteur. En particulier la mémoire 58 comporte successivement :

- une valeur $E_{bruit}$ correspondante au niveau de bruit admissible par le circuit de réception 51,
- une valeur représentant le niveau de l'énergie de saturation $E_{saturation}$ du circuit de réception 51,
- la valeur instantanée de l'énergie Er reçue par le circuit de réception 51 pendant une fenêtre temporelle d'activation du circuit de réception,
- une valeur représentative de l'énergie ultrasonore $E_{aseuil}$ à ne pas dépasser pour éviter la saturation,
- et enfin une valeur représentative à la période i de réception d'une moyenne de l'énergie ultrasonore M(i) reçue pendant un nombre prédéterminé N de créneaux ou de fenêtres temporelles d'activation du circuit de réception.

D'autre part le détecteur de l'invention comporte un circuit 59 destiné à calculer en permanence à chaque période T une valeur de la moyenne glisssante, telle qu'elle a été définie ci-dessus.

La sortie de ce circuit de calcul 59 est écrite à l'adresse contenant la valeur M(i) de la mémoire 58, qui est remise à jour à chaque période T.

D'autre part le détecteur selon l'invention comporte, ainsi qu'il est connu de l'art antérieur, un circuit 55 de test d'une condition d'alarme dont la sortie attaque un actionneur d'alarme 57 comme une sirène ou la mise en clignotement des phares du véhicule protégé par le détecteur de l'invention.

Le circuit de test 55 comporte des circuits 56 dans lesquels sont enregistrés les seuils qui ont été décrits à la figure 5. Ces seuils peuvent être réalisés par une valeur unique prise positivement pour représenter la ligne 34 de la figure 5 ou négativement pour représenter la ligne 35 autour de la valeur moyenne 33 pré-enregistrée.

On va maintenant détailler le contenu du moyen pour ajuster la valeur de l'énergie émise 54. Ce moyen comporte principalement une mémoire dans laquelle est enregistrée en 66 la stratégie de réglage déroulée ou exécutée par un microprocesseur lors de la première étape R du fonctionnement représenté par exemple à la figure 7.

L'exécution de cette stratégie de réglage est initialisée par un détecteur d'événements 69, chacun de ces événements étant destiné à initialiser le fonctionnement de la stratégie, par exemple dans un microprocesseur.

Le détecteur d'événements détecte principalement les trois événements suivants :

- le verrouillage centralisé des portières 70, indiquant que le véhicule est déplacé en mode alarme, son propriétaire l'ayant quitté,
- le déclenchement 71 d'événements liés au fonctionnement du véhicule comme par exemple le déclenchement du groupe motoventilateur, alors que le détecteur est activé,
- et enfin un test indiquant que l'énergie reçue moyenne M(i) n'est pas comprise dans une gamme de valeur comprise entre la valeur $E_{bruit}$ et la valeur $E_{saturation}$.

Le test est exécuté par un circuit de test 73 dont trois entrées sont connectées respectivement aux adresses de la mémoire 58, contenant respectivement $E_{bruit}$, $E_{saturation}$ et M(i).

Cette initialisation par le détecteur 69 permet, d'une part, de réaliser les étapes de réglage et d'apprentissage à chaque fois que le véhicule est mis en stationnement et, d'autre part, à chaque fois que les conditions extérieures, comme les conditions climatiques, ont changé et sont susceptibles de déclencher de fausses alarmes.

L'exécution de la stratégie de réglage, comme celle représentée à la figure 6, active un circuit 67 permettant de tester une condition de réglage de la valeur de l'énergie émise EA. Ce circuit de test est connecté aux deux adresses de la mémoire 58 contenant respectivement la valeur Erm de l'énergie reçue lors d'une fenêtre temporelle d'activation des moyens du circuit de réception, et d'autre part, la valeur préenregistrée en $E_{aseuil}$ dans la mémoire 58.

Selon la stratégie décrite notamment dans l'exemple de la figure 6, on exécute un ajustement de la valeur de l'énergie ultrasonore émise, par un calcul de la durée t1 du créneau constituant la fenêtre d'activation du circuit d'émission 50.

La sortie de ce circuit de calcul 68 est transmise à l'entrée d'un registre mémoire 65 permettant de remettre à jour la valeur t1 réglant en fait l'énergie ultrasonore émise.

Le détecteur 69, tel qu'il a été décrit plus haut, est capable de détecter des événements liés au fonctionnement du véhicule alors que le véhicule est protégé par le détecteur de l'invention. C'est le cas en particulier du déclenchement du groupe motoventilateur de refroidissement du moteur de propulsion du véhicule, ou encore de la mise en route à distance du climatiseur de l'habitacle.

Ainsi, un véhicule équipé d'un détecteur selon l'invention, peut exécuter un certain nombre d'actions bien qu'il ne soit plus en activité.

Ainsi, par exemple, la température du circuit de refroidissement du moteur du véhicule mis en stationnement augmente peu après l'arrêt. De ce fait, le capteur de température commande la mise en marche du ventilateur de refroidissement du radiateur.

Il en résulte un bruit généré par le ventilateur de refroidissement qui est détecté par le détecteur à ultrasons volumétrique et peut déclencher la condition d'alarme de façon intempestive.

C'est le rôle d'un capteur comme le capteur 71, par exemple connecté à une borne de la batterie, de détecter l'apparition d'un courant de démarrage du moteur électrique du ventilateur de refroidissement.

Il est possible de fournir une nouvelle condition d'alarme permettant au système d'alarme de s'adapter au bruit généré par le moteur du ventilateur. De même, à l'extinction du ventilateur, il faut que la condition d'alarme soit rétablie.

Le détecteur, selon l'invention, dans un mode de réalisation préféré est principalement constitué par un microcontrôleur coopérant avec un convertisseur analogique-numérique, une mémoire pré-enregistrée contenant un programme déroulant les différentes séquences de l'invention et un certain nombre de ports d'entrée/sortie permettant de contrôler le circuit électronique d'émission et le circuit électronique de réception.

L'invention s'adapte notamment à des réalisations mettant en oeuvre un nombre quelconque de transducteurs, que ceux-ci fonctionnent en alternat ou en émission ou réception. Les étapes de réglage et d'apprentissage peuvent être indépendantes ou communes.

L'invention a été décrite dans le cadre d'une application à l'automobile. Celle-ci n'est pas exclusive et au contraire l'invention peut s'adapter à des systèmes d'alarme dans différents domaines techniques.

**Revendications**

1. Détecteur volumétrique à ultrasons du type comportant au moins un mode de fonctionnement en émission et un mode de fonctionnement en réception d'une onde ultrasonore progressant dans un volume comme l'habitacle d'un véhicule, dans des fenêtres ($t_1$, $t_2$) temporelles d'activation, ces fenêtres étant dans une période (T) prédéterminée, caractérisé en ce qu'il comporte des moyens (52,53) pour régler la forme de la fenêtre ($t_1$) temporelle d'activation d'un circuit d'émission (50) et de la fenêtre ($t_2$) temporelle d'activation d'un circuit de réception (51) de façon à réduire la consommation électrique du détecteur, en optimisant la sensibilité.

2. Détecteur selon la revendication 1, caractérisé en ce que le circuit de réception (51) génère à chaque fenêtre d'activation une valeur (Erm) représentative de l'énergie reçue et en ce qu'il comporte aussi un circuit de calcul (59) d'une moyenne glissante M(i) prise sur N fenêtres précédentes.

3. Détecteur selon la revendication 2, caractérisé en ce que le circuit de calcul (59) comporte une première entrée recevant la valeur (Erm) de l'énergie reçue lors de la fenêtre (i) et une seconde entrée recevant la valeur (M(i - 1)) de la moyenne glissante calculée lors de la fenêtre précédente (M(i-1)) et un moyen pour calculer la nouvelle valeur de la moyenne glissante selon la relation $M(i) = [(Poids-1) * M(i-1) + Erm]/Poids$ et pour mémoriser cette nouvelle valeur.

4. Détecteur selon la revendication 3, caractérisé en ce que le paramètre (Poids) est lié au nombre N de fenêtres précédentes et est tel que Poids est une puissance entière de 2 ($2^k$) pour faciliter les calculs en mode binaire.

5. Détecteur selon la revendication 2, caractérisé en ce qu'il comporte aussi un moyen (54) pour ajuster l'énergie ultrasonore émise par le détecteur en fonction de la valeur (Erm) de l'énergie ultrasonore détectée par le circuit de réception (51).

6. Détecteur selon la revendication 5, caractérisé en ce que le moyen (54) pour ajuster l'énergie ultrasonore émise par le détecteur comporte un circuit (68) de calcul de la durée (t1) de la fenêtre d'activation du circuit d'émission, en fonction d'une stratégie enregistrée et exécutée par un circuit (66,67) comme un microprocesseur, lors d'une étape de réglage (R).

7. Détecteur selon la revendication 5, caractérisé en ce que le moyen (54) pour ajuster l'énergie ultrasonore émise par le détecteur comporte un circuit de calcul de l'amplitude des ondes ultrasonores émises, en fonction d'une stratégie enregistrée et exécutée par un circuit (66,67) comme un microprocesseur.

8. Détecteur selon les revendications 6 ou 7, caractérisé en ce que le moyen (54) comporte aussi un circuit (67) détectant qu'une condition de réglage, comme le dépassement d'un seuil de saturation ($E_{aseuil}$) du circuit de réception, dont une sortie est transmise au circuit (68) de calcul de la durée ($t_l$) et/ou de l'amplitude des ondes ultrasonores émises, pour ajuster l'énergie ultrasonore émise par le détecteur à une valeur convenable dans une phase d'exploitation du détecteur, dite de réglage selon ladite stratégie pré-enregistrée (66).

9. Détecteur selon la revendication 6, caractérisé en ce que l'exécution de la stratégie (66) est initialisée par un circuit (69) de détection d'événements d'initialisation qui permet de faire passer le détecteur dans une étape de réglage.

10. Détecteur selon la revendication 9, caractérisé en ce que le circuit (69) comporte un moyen (70) pour détecter le verrouillage centralisé des portières du véhicule ou toute autre commande équivalente à une mise en action volontaire du détecteur par son utilisateur.

11. Détecteur selon la revendication 10, caractérisé en ce que le circuit (69) comporte de plus un moyen (71) pour détecter le déclenchement du groupe motoventilateur (GMV) ou tout autre événement lié à un fonctionnement du véhicule ou de l'un de ses organes après la mise en action volontaire du détecteur.

12. Détecteur selon la revendication 9, caractérisé en ce que le circuit (69) reçoit une information d'activation d'un circuit (73) de test d'une condition de fonctionnement du détecteur lors d'une étape de surveillance (S).

13. Détecteur selon la revendication 12, caractérisé en ce que la condition de fonctionnement en étape de surveillance (S) comporte la double condition que l'énergie reçue moyenne M(i) est comprise entre une valeur ($E_{bruit}$) correspondante au niveau de bruit du circuit de réception (51) et une valeur ($E_{saturation}$) en dessus desquelles le circuit de réception ne permettrait plus de détecter une condition d'alarme.

14. Détecteur selon la revendication 5, caractérisé en ce que le détecteur comporte aussi un moyen (52) pour régler la forme d'une fenêtre d'émission et comporte un oscillateur (60) fonctionnant à une fréquence (1/T) et un générateur (61) de créneaux carrés synchronisé sur l'oscillateur (60) et dont la durée de chaque créneau est commandée par un circuit mémorisant (65) au moins un paramètre de forme du créneau provenant du moyen (54) comme une durée (t1) prédéterminée.

15. Détecteur selon la revendication 14, caractérisé en ce que le moyen (53) pour régler la forme d'une fenêtre de réception comporte un circuit (63) de réglage d'un retard (t4) du front montant du créneau d'activation du circuit de réception sur le front montant du créneau d'activation du circuit d'émission et un circuit (64) de réglage d'une durée (t2) de la fenêtre dont les sorties sont transmises à un générateur (62) de créneaux carrés, le circuit (63) étant synchronisé sur la sortie de l'oscillateur (60) et les paramètres retard (t4) et durée (t2) pouvant être introduits par des moyens (74,75).

16. Détecteur selon l'une des revendications précédentes, caractérisé en ce qu'il comporte une mémoire (58) destinée à mémoriser en permanence au moins l'une des valeurs suivantes :
- la valeur ($E_{bruit}$) en dessous de laquelle le circuit de réception (51) ne permet plus de détecter une condition d'alarme, cette valeur pouvant être introduite par un moyen d'entrée (76),
- la valeur ($E_{saturation}$) en dessus de laquelle le circuit de réception (51) ne permet plus de détecter une condition d'alarme, cette valeur pouvant être introduite par un moyen d'entrée (77),
- la valeur ($E_{aseuil}$) corrrespondante à l'énergie ultrasonore de saturation à l'émission du détecteur,
et de mémoriser au cours de chaque période T au moins l'une des valeurs suivantes :
- une valeur (Erm) de l'énergie reçue par le circuit de réception (51) lors d'une fenêtre (R1) de réception,
- une valeur M(i) calculée à partir de l'énergie reçu (Er), dite moyennne glissante du front montant du créneau d'activation du circuit de réception sur le front montant du créneau d'activation du circuit d'émission.

17. Détecteur selon la revendication 2, caractérisé en ce qu'il comporte un circuit de test (55) d'une condition d'alarme qui coopère avec des moyens (56) pour déterminer si la valeur Erm de l'énergie reçue lors de la période T en cours est comprise entre une première valeur (34) et une seconde valeur (35) de part et d'autre d'une valeur de consigne (33) de la moyenne M(i), et pour déclencher une alarme (57).

18. Détecteur selon la revendication 6, caractérisé en ce que le moyen (54), à l'issue de l'étape de réglage (R), active le démarrage du circuit de calcul (59) lors d'une étape d'apprentissage (A) pendant N périodes, phase pendant laquelle la valeur (Erm) de la moyennne glissante est établie.

19. Détecteur selon les revendications 17 et 18, caractérisé en ce que le circuit de test (55) de condition d'alarme est inhibé pendant les étapes de réglage et d'apprentissage.

**Patentansprüche**

1. Volumetrischer Ultraschalldetektor, enthaltend wenigstens eine Betriebsart "Senden" und eine Betriebsart "Empfangen" einer Ultraschallwelle, die sich in einem Volumen wie dem Fahrgastraum eines Fahrzeugs in zeitweiligen Aktivierungsfenstern (t1, t2) ausbreitet, wobei diese Fenster in einem festgelegten Zeitraum (T) liegen, **dadurch gekennzeichnet**, daß er Mittel (52, 53) zur Regelung der Form des zeitweiligen Aktivierungsfensters (t1) eines Sendekreises (50) und des zeitweiligen Aktivierungsfensters (t2) eines Empfangskreises (51) enthält, so daß der Stromverbrauch des Detektors reduziert und gleichzeitig seine Empfindlichkeit optimiert wird.

2. Detektor nach Anspruch 1, **dadurch gekennzeichnet**, daß der Sendekreis (51) in jedem Aktivierungsfenster einen Wert (Erm) erzeugt, der für die empfangene Energie repräsentativ ist, und daß er auch einen Berechnungskreis (59) zur Ermittlung eines gleitenden Mittelwerts M(i) an N vorausgehenden Fenstern enthält.

3. Detektor nach Anspruch 2, **dadurch gekennzeichnet**, daß der Berechnungskreis (59) einen ersten Eingang enthält, der den Wert (Erm) der beim Fenster (i) empfangenen Energie und einen zweiten Eingang zum Empfang des gleitenden Mittelwerts (M(i - 1)) enthält, der bei dem vorhergehenden Fenster (M(i-1)) berechnet wurde, sowie ein Mittel zur Berechnung des neuen Werts des gleitenden Mittelwerts entsprechend der Gleichung M(i) = [(Gewicht-1) + M(i-1) + Erm]/Gewicht und zur Speicherung dieses neuen Werts.

4. Detektor nach Anspruch 3, **dadurch gekennzeichnet**, daß der Parameter (Gewicht) mit der Anzahl N vorhergehender Fenster verbunden und so beschaffen ist, daß "Gewicht" eine ganzzahlige Potenz von 2 ($2^k$) ist, um die Berechnungen im Binärmodus zu erleichtern.

5. Detektor nach Anspruch 2, **dadurch gekennzeichnet**, daß er auch ein Mittel (54) enthält, um die Ultraschallenergie einzustellen, die vom Detektor entsprechend dem Wert (Erm) der vom Empfangskreis (51) erfaßten Ultraschallenergie ausgesendet wird.

6. Detektor nach Anspruch 5, **dadurch gekennzeichnet**, daß das Mittel (54) zur Einstellung der vom Detektor ausgesandten Ultraschallenergie einen Schaltkreis (68) zur Berechnung der Dauer (t1) des Aktivierungsfensters des Sendekreises entsprechend einer Strategie enthält, die durch einen Schaltkreis (66, 67) wie einen Mikroprozessor während einer Regelstufe (R) registriert und ausgeführt wird.

7. Detektor nach Anspruch 5, **dadurch gekennzeichnet,** daß das Mittel (54) zur Einstellung der vom Detektor ausgesandten Ultraschallenergie einen Schaltkreis zur Berechnung der Amplitude der Ultraschallwellen enthält, die entsprechend einer Strategie ausgesendet werden, welche durch einen Schaltkreis (66, 67) wie einen Mikroprozessor registriert und ausgeführt wird.

8. Detektor nach den Ansprüchen 6 oder 7, **dadurch gekennzeichnet,** daß das Mittel (54) auch einen Schaltkreis (67) zur Erfassung eines Regelzustandes wie der Überschreitung einer Sättigungsschwelle ($E_{aschwell}$) des Empfangskreises enthält, dessen einer Ausgang an den Schaltkreis (68) zur Berechnung der Dauer (t1) und/oder der Amplitude der ausgesendeten Ultraschallwellen übermittelt wird, um die durch den Detektor ausgesendete Ultraschallenergie auf einen geeigneten Wert in einer Betriebsphase des Detektors einzustellen, die sogenannte Regelung nach der genannten vor-registrierten Strategie (66).

9. Detektor nach Anspruch 6, **dadurch gekennzeichnet,** daß die Ausführung der Strategie (66) durch einen Schaltkreis (69) zur Erfassung von Initialisierungsereignissen initialisiert wird, der einen Übergang des Detektors in eine Regelstufe zuläßt.

10. Detektor nach Anspruch 9, **dadurch gekennzeichnet**, daß der Schaltkreis (69) ein Mittel (70) zur Erfassung der Zentralverriegelung der Fahrzeugtüren oder jeder anderen Steuerung enthält, die einer willkürlichen Betätigung des Detektors durch den Benutzer entspricht.

11. Detektor nach Anspruch 10, **dadurch gekennzeichnet**, daß der Schaltkreis (69) außerdem ein Mittel (71) zur Erfassung der Auslösung des Lüftersatzes (GMV) oder jedes anderen Ereignisses enthält, welches mit einer Funktion des Fahrzeugs oder eines seiner Organe nach willkürlicher Betätigung des Detektors verbunden ist.

12. Detektor nach Anspruch 9, **dadurch gekennzeichnet**, daß der Schaltkreis (69) eine Information zur Aktivierung eines Prüfkreises (73) eines Funktionszustands des Detektors während einer Überwachungsstufe (S) empfängt.

13. Detektor nach Anspruch 12, **dadurch gekennzeichnet**, daß der Funktionszustand in der Überwachungsstufe (S) den doppelten Zustand aufweist, daß die empfangene mittlere Energie M(i) zwischen einem dem Schallpegel des Empfangskreises (51) entsprechenden Wert ($E_{schall}$) und einem Wert ($E_{sätt}$) liegt, unterhalb deren der Empfangskreis keine Erfassung eines Alarmzustandes mehr zulassen würde.

14. Detektor nach Anspruch 5, **dadurch gekennzeichnet,** daß der Detektor auch ein Mittel (52) zur Regelung der Form eines Sendefensters enthält und auch einen bei einer Frequenz (1/T) arbeitenden Oszillator (60) und einen mit dem Oszillator (60) synchronisierten Generator (61) von Rechteckimpulsen enthält und wobei die Dauer jedes Auftastimpulses durch einen Schaltkreis (65) gesteuert wird, der wenigstens einen Formparameter des vom Mittel (54) kommenden Auftastimpulses als festgelegte Dauer (t1) speichert.

15. Detektor nach Anspruch 14, **dadurch gekennzeichnet**, daß das Mittel (53) zur Regelung der Form eines Empfangsfensters einen Schaltkreis (63) zur Regelung einer Verzögerung (t4) der vorderen Flanke des Auftastimpulses zur Aktivierung des Empfangskreises an der aufsteigenden Flanke des Auftastimpulses zur Aktivierung des Sendekreises und einen Schaltkreis (64) zur Regelung einer Dauer (t2) des Fensters enthält, dessen Ausgänge an einen Generator (62) von Rechteckimpulsen übermittelt werden, wobei der Schaltkreis (63) am Ausgang des Oszillators (60) synchronisiert ist und die Parameter Verzögerung (t4) und Dauer (t2) durch Mittel (74, 75) eingeführt werden können.

16. Detektor nach einem der vorherigen Ansprüche, **dadurch gekennzeichnet,** daß er einen Speicher (58) enthält, der dazu bestimmt ist, wenigstens einen der folgenden Werte ständig zu speichern:
   - den Wert ($E_{schall}$), unterhalb dessen der Empfangskreis (51) keine weitere Erfassung eines Alarmzustandes mehr zuläßt, wobei dieser Wert durch ein Eingangsmittel (76) zugeführt werden kann,
   - den Wert ($E_{sätt}$), unterhalb dessen der Empfangskreis (51) keine weitere Erfassung eines Alarmzustands mehr zuläßt, wobei dieser Wert durch ein Eingangsmittel (77) zugeführt werden kann,
   - den Wert ($E_{aschwell}$), der der Sättigungs-Ultraschallenergie bei Aussendung vom Detektor entspricht,
   und um im Lauf jeder Periode T wenigstens einen der folgenden Werte zu speichern:
   - einen Wert (Erm) der Energie, die vom Empfangskreis (51) während eines Empfangsfensters (R1) empfangen wird,
   - einen Wert M(i), der aufgrund der empfangenen Energie (Er) berechnet wird, der sogenannte gleitende Mittelwert der aufsteigenden Flanke des Auftastimpulses zur Aktivierung des Empfangskreises an der aufsteigenden Flanke des Auftastimpulses zur Aktivierung des Sendekreises.

**17.** Detektor nach Anspruch 2, **dadurch gekennzeichnet**, daß er einen Prüfkreis (55) für einen Alarmzustand enthält, der mit Mitteln (56) zusammenwirkt, die dazu dienen, festzustellen, ob der Wert Erm der während der laufenden Periode T empfangenen Energie zwischen einem ersten Wert (34) und einem zweiten Wert (35) beiderseits eines Sollwerts (33) des Mittelwerts M(i) liegt, und um einen Alarm (57) auszulösen.

**18.** Detektor nach Anspruch 6, **dadurch gekennzeichnet**, daß das Mittel (54) am Ausgang der Regelstufe (R) den Start des Berechnungskreises (59) bei einer Übungsstufe (A) während N Perioden aktiviert, wobei während dieser Phase der Wert (Erm) des gleitenden Mittelwerts festgelegt wird.

**19.** Detektor nach den Ansprüchen 17 und 18, **dadurch gekennzeichnet**, daß der Prüfkreis (55) für den Alarmzustand während der Regel- und Übungsstufen gesperrt ist.

## Claims

**1.** An ultrasonic volumetric detector, of the type comprising at least one emissive operating mode and a receptive operating mode, for an ultrasonic wave progressing into a volume such as the cabin of a vehicle within activation time windows $(t_1, t_2)$, the said windows being within a predetermined period (T), characterised in that it includes means (52, 53) for regulating the shape of the activation time window $(t_1)$ of an emission circuit (50) and that of the activation time window $(t_2)$ of a reception circuit (51), in such a way as to reduce the electrical consumption of the detector by optimising its sensitivity.

**2.** A detector according to Claim 1, characterised in that the reception circuit (51) generates, at each activation window, a value (Erm) representing the energy received, and in that it also includes a circuit (59) for computing a sliding mean (Mi) taken over N preceding windows.

**3.** A detector according to Claim 2, characterised in that the computing circuit (59) has a first input receiving the value (Erm) of the energy received during the window (i), and a second input receiving the value (M(i-1)) of the sliding mean calculated during the preceding window (M(i-1)), and a means for calculating the new value of the sliding mean in accordance with the relationship (M(i) = [(Weight-1)∗M(i-1)+Erm]/Weight, and for memorising the said new value.

**4.** A detector according to Claim 3, characterised in that the parameter (Weight) is linked to the number N of preceding windows, and is such that weight is a whole number power of $2(2^k)$ in order to facilitate the computations in binary mode.

**5.** A detector according to Claim 2, characterised in that it further includes a means (54) for adjusting the ultrasonic energy emitted by the detector as a function of the value (Erm) of the ultrasonic energy detected by the reception circuit (51).

**6.** A detector according to Claim 5, characterised in that the means (54) for adjusting the ultrasonic energy emitted by the detector includes a circuit (68) for computing the duration $(t_1)$ of the activation window of the emission circuit, according to a strategy which has been entered and which is carried out by a circuit (66, 67) such as a microprocessor, during a regulating step (R).

**7.** A detector according to Claim 5, characterised in that the means (54) for adjusting the ultrasonic energy emitted by the detector includes a circuit for computing the amplitude of the ultrasonic waves emitted, as a function of a strategy which has been entered and which is carried out by a circuit (66, 67) such as a microprocessor.

**8.** A detector according to Claim 6 or Claim 7, characterised in that the means (54) further includes a circuit (67) for detecting a regulating condition, such as the exceeding of a saturation threshold $(E_{a\ threshold})$ of the reception circuit, an output of which is passed to the circuit (68) for computing the duration $(t_1)$ and/or the amplitude of the ultrasonic waves emitted, so as to adjust the ultrasonic energy emitted by the detector to a suitable value during a phase of use of the detector, i.e. adjustment in accordance with the said pre-entered strategy (66).

**9.** A detector according to Claim 6, characterised in that the execution of the strategy (66) is initiated by a circuit (69) for detecting initialisation events that enable the detector to pass to a regulating step.

**10.** A detector according to Claim 9, characterised in that the circuit (69) includes means (70) for detecting the central locking of the doors of the vehicle, or any other control function equivalent to a voluntary activation of the detector by its user.

11. A detector according to Claim 10, characterised in that the circuit (69) further includes means (71) for detecting the starting of the motorised fan unit (GMV), or any other event linked to an operating function of the vehicle or of one of its component parts after voluntary activation of the detector.

12. A detector according to Claim 9, characterised in that the circuit (69) receives an activation signal from a circuit (73) for testing an operating condition of the detector during a surveillance step (S).

13. A detector according to to Claim 12, characterised in that the operating condition in the surveillance step (S) includes the double condition that the mean energy received (Mi) lies between a value ($E_{noise}$) corresponding to the noise level of the reception circuit (51) and a value ($E_{saturation}$), below which values the reception circuit would no longer permit detection of an alarm condition.

14. A detector according to Claim 5, characterised in that the detector further includes a means (52) for regulating the shape of an emission window, and includes an oscillator (60) operating at a frequency (1/T), and a generator (61) of square pulses synchronised with the oscillator (60), and such that the period of each pulse is controlled by a memory circuit (65), with at least one waveform parameter of the pulse coming from the means (54), such as a predetermined period ($t_1$).

15. A detector according to Claim 14, characterised in that the means (53) for regulating the shape of a reception window includes a circuit (63) for regulating a time delay ($t_4$) of the rising front of the activation pulse for the reception circuit, over the rising front of the activation pulse for the emission circuit, together with a circuit (64) for regulating a time period ($t_2$) of the window, the outputs of which are transmitted to a generator (62) of square pulses, the circuit (63) being synchronised on the output of the oscillator (60), and the delay parameter ($t_4$) and period parameter ($t_2$) being able to be introduced by means (74, 75).

16. A detector according to one of the preceding Claims, characterised in that it includes a memory (58) adapted to memorise permanently at least one of the following values:
- the value ($E_{noise}$) below which the reception circuit (51) no longer permits detection of an alarm condition, this value being able to be introduced by an input means (76),
- the value ($E_{saturation}$) above which the reception circuit (51) no longer permits an alarm condition to be detected, this value being able to be introduced by an input means

(77),
- the value ($E_{a\ threshold}$) corresponding to the ultrasonic saturation energy on the emission side of the detector,
and for memorising over each period T at least one of the following values:
- a value (Erm) of the energy received by the reception circuit (51) during a reception window (R1),
- a value (Mi) calculated from the energy received (Er), referred to as a sliding mean of the rising front of the activation pulse for the reception circuit over the rising front of the activation pulse of the emission circuit.

17. A detector according to Claim 2, characterised in that it includes a test circuit (55) for testing an alarm condition, which cooperates with means (56) for determining whether the value Erm of the energy received during the prevailing period T lies between a first value (34) and a second value (35) on either side of a datum value (33) of the mean M(i), and for activating an alarm (57).

18. A detector according to Claim 6, characterised in that, at the end of the regulating step (R), the means (54) activate starting of the computing circuit (59) during a learning step (A) over N periods, during which phase the value (Erm) of the sliding mean is established.

19. A detector according to Claims 17 and 18, characterised in that the test circuit (55) for the alarm condition is inhibited during the regulating and learning steps.

FIG.1

FIG.2

14

FIG.3

FIG.4

FIG.5

$$t1(1) = 1/2(t1M + t1m): \quad \text{Condition} = +$$
$$t1(2) = t1(1) + P \quad : \quad \text{Condition} = +$$
$$t1(3) = t1(2) + P \quad : \quad \text{Condition} = -$$
$$t1(4) = t1(3) - P/2 \quad : \quad \text{Condition} = +$$
$$t1(5) = t1(4) + P/4 \quad : \quad \text{Condition atteinte}$$

## FIG.6

## FIG.7

FIG.8